# EUROPÄISCHE PATENTANMELDUNG

(11) **EP 4 502 449 A1**
(43) Veröffentlichungstag der Anmeldung: **05.02.2025**
(21) Anmeldenummer: 23189138.3
(22) Anmeldetag: 02.08.2023
(51) Int. Cl.: F17C 3/08

(54) **BEHÄLTER ZUR AUFNAHME EINES KRYOFLUIDS**

(71) Anmelder: SAG Group B.V., 2222 AK Katwijk (NL)
(72) Erfinder: HACKSTEINER, Markus, 9500 Villach (AT)
(74) Vertreter: Weiser & Voith Patentanwälte Partnerschaft

(57) **Zusammenfassung**

Ein Behälter (1) zur Aufnahme eines Kryofluids, insbesondere kryogenen Wasserstoffs, hat einen Außenbehälter (3) und einen darin über eine Stützstruktur (13, 14) beabstandet angeordneten Innenbehälter (2), wobei der Zwischenraum (4) zwischen Außen- und Innenbehälter zwecks Wärmeisolierung über einen die Wandung des Außenbehälters (3) durchsetzenden Evakuierungsanschluss (5) evakuierbar ist, wobei im Zwischenraum (4) zumindest eine wärmestrahlungsreflektierende Folie (6) liegt, und wobei zwischen der Innenseite (18) des Außenbehälters (3) und der Außenseite (17) der Folie (6) zumindest ein Steg (19, 20) angeordnet ist.

## Beschreibung

Die vorliegende Erfindung betrifft einen Behälter zur Aufnahme eines Kryofluids, insbesondere kryogenen Wasserstoffs, mit einem Außenbehälter und einem darin über eine Stützstruktur beabstandet angeordneten Innenbehälter, wobei der Zwischenraum zwischen Außen- und Innenbehälter zwecks Wärmeisolierung über einen die Wandung des Außenbehälters durchsetzenden Evakuierungsanschluss evakuierbar ist, und wobei im Zwischenraum zumindest eine wärmestrahlungsreflektierende Folie liegt.

Um den Energiegehalt von Energieträgern, welche unter Normalbedingungen gasförmig sind, zu erhöhen, werden diese für Transport- und Lagerungszwecke entweder komprimiert und in Druckbehältern gespeichert oder auf Tieftemperatur abgekühlt und dabei zu einem Kryofluid zumindest teilverflüssigt und in thermisch isolierten Behältern gespeichert. Zum Antrieb von Fahrzeugen werden z.B. verflüssigter Wasserstoff oder verflüssigtes Erdgas (liquefied natural gas, LNG) als Kryofluide mit hoher Energiedichte gespeichert, um hinterher zum Betrieb von im wesentlichen herkömmlichen Verbrennungskraftmaschinen oder Brennstoffzellen der Fahrzeuge genutzt zu werden.

Zur Aufrechterhaltung der extrem geringen Temperaturen solcher Kryofluide, z.B. im Bereich von -252 °C im Falle von flüssigem Wasserstoff oder -161 °C im Falle von LNG, wird der Zwischenraum zwischen Innen- und Außenbehälter nicht nur evakuiert, sondern darin auch zumindest eine Folie aus wärmestrahlungsreflektierendem Material, z.B. Aluminium, angeordnet. Wenn sich die Folie beim Evakuieren des Zwischenraums bewegt und infolge des Druckabfalls an der Innenseite des Außenbehälters anlegt, können dort während des Evakuierens Gaseinschlüsse verbleiben. Das eingeschlossene Gas entweicht im Lauf der Zeit, verteilt sich im Zwischenraum und beeinträchtigt so die für die Wärmeisolierung erforderliche Vakuumqualität im Zwischenraum.

Die Erfindung setzt sich zum Ziel, einen verbesserten Behälter für Kryofluide zu schaffen, der diese Probleme überwindet.

Dieses Ziel wird mit einem Behälter der einleitend genannten Art erfindungsgemäß dadurch erreicht, dass zwischen der Innenseite des Außenbehälters und der Außenseite der Folie zumindest ein Steg angeordnet ist.

Der bzw. die Stege im Bereich zwischen Außenbehälter und Folie verhindern, dass sich die Folie dort beim Evakuieren an die Innenseite des Außenbehälters anlegt. Wenn gemäß einem bevorzugten Merkmal der Erfindung der zumindest eine Steg von einem dem Evakuierungsanschluss entfernten Ort des Behälters ausgeht und zumindest bis in die Nähe des Evakuierungsanschlusses verläuft, wird allfälliges Gas, das im Bereich des Steges sonst eingeschlossen wäre, entlang des Steges bis zum Evakuierungsanschluss geleitet, wo es abgepumpt wird. Im Ergebnis wird eine schleichende Verschlechterung des Vakuums über die Zeit durch das Entweichen von Gas aus solchen Gaseinschlüssen verhindert. In praktischen Versuchen konnte der Druckanstieg im Zwischenraum zwischen Innen- und Außenbehälter über die Zeit, der durch Gasfreisetzung auftritt, um das bis zu 570-Fache reduziert werden.

Günstig ist, wenn der zumindest eine Steg in seinem Verlauf zumindest eine Unterbrechung hat. Eine solche Unterbrechung kann beispielsweise an einer herstellungsbedingten Nahtstelle des Außenbehälters vorgesehen sein, um die Herstellung des Behälters zu vereinfachen. Alternativ oder ergänzend kann der zumindest eine Steg an jeder beliebigen Stelle unterbrochen sein, z.B. in regelmäßigen Abständen oder an Stellen, wo Gaseinschlüsse aus konstruktiven Gründen besonders wahrscheinlich sind. Jede Unterbrechung bildet eine Durchtrittsstelle für allfälliges Gas quer zur Längserstreckung des zumindest einen Stegs.

In einer besonders vorteilhaften Ausführungsform der Erfindung ist zumindest ein Paar von Stegen vorgesehen, die zwischeneinander einen Evakuierungskanal bilden. Dies verleiht den Stegen eine Doppelfunktion. Einerseits beabstanden sie die Folie von der Innenseite des Außenbehälters und verhindern dort Gaseinschlüsse. Anderseits bringt der Evakuierungskanal zwischen den Stegen einen vom Evakuierungsanschluss entfernten Ort des Behälters in direkte Strömungsverbindung mit dem Evakuierungsanschluss, sodass beim Evakuieren der Zwischenraum von zwei Seiten her abgesaugt wird.

Bevorzugt verlaufen die Stege des Stegpaares etwa parallel zueinander, und insbesondere entspricht der gegenseitige Abstand der Stege eines Paares etwa der Dicke eines Steges. Dies verhindert, dass die Folie sich zwischen den Stegen eines Stegpaares beim Evakuieren an den Außenbehälter anlegen kann.

Besonders günstig ist es, wenn mehrere Stegpaare über den Innenumfang des Außenbehälters verteilt sind. Je mehr Stege bzw. Stegpaare, desto besser ist die Entgasungswirkung beim Evakuieren. Eine gute Wahl sind beispielsweise 4 - 12, bevorzugt 6 - 8 Stegpaare über den Innenumfang verteilt.

Bei Verwendung mehrerer Stegpaare ist es besonders vorteilhaft, wenn die Evakuierungskanäle aller Stegpaare am genannten entfernten Ort miteinander in Strömungsverbindung stehen, bevorzugt indem die Stegpaare am genannten entfernten Ort voneinander beabstandet sind. Dadurch wird dieser Ort über alle Evakuierungskanäle zeitgleich abgesaugt.

In einer ersten bevorzugten Variante können die Stegpaare vom genannten entfernten Ort bis zum Evakuierungsanschluss verlaufen und ihre Evakuierungskanäle dort mit dem Evakuierungsanschluss in Strömungsverbindung stehen, bevorzugt indem sie dort voneinander und von diesem beabstandet sind. Alternativ können die Stege eines der Stegpaare den Evakuierungsanschluss passieren und dabei vorübergehend auseinanderlaufen, um zwischeneinander den Evakuierungsanschluss mit Abstand zu umlaufen. In letzterer Variante können insbesondere die Stegpaare vom genannten entfernten Ort bis zu einem diesem gegenüberliegenden Ort des Behälters verlaufen und dort miteinander in Strömungsverbindung stehen, bevorzugt indem sie am genannten gegenüberliegenden Ort voneinander beabstandet sind. Alle diese Varianten ergeben eine gleichmäßige Absaugung des Zwischenraums zwischen der Folie und der Innenseite des Außenbehälters von zwei bzw. drei Stellen her, also entweder vom Ort des Evakuierungsanschlusses und vom genannten entfernten Ort her oder vom Ort des Evakuierungsanschlusses und von zwei einander gegenüberliegenden Enden des Behälters her, beispielsweise seinen stirnseitigen Enden.

Mehrere Stege können untereinander zu einem Gitter oder Netz verbunden und in den Zwischenraum zwischen Folie und Außenbehälter eingelegt werden. Alternativ können der bzw. die Stege auf der Außenseite der Folie festgelegt sein. Besonders günstig ist es, wenn die Stege mit der Innenseite des Außenbehälters verbunden sind, bevorzugt punktweise verschweißt oder einstückig damit ausgebildet. Dies erleichtert die Fertigung und Montage. Die Folie kann z.B. als rohrförmige Hülle auf den Innenbehälter aufgeschoben werden, und dann kann der Innenbehälter mit aufgeschobener Folie in den mit den Stegen versehenen Außenbehälter eingebracht werden.

Die Stege können aus jedem beliebigen Material gefertigt sein, beispielsweise vakuumtauglichen Kunststoffen, oder aus dem Material des Außenbehälters, wenn sie aus diesem ausgeformt sind, z.B. durch Prägen. In einer besonders vorteilhaften Ausführungsform sind die Stege durch Drähte gebildet, die beispielsweise auf die Innenseite des Außenbehälters bevorzugt punktweise geschweißt werden. Dies erlaubt eine einfache und kostengünstige Fertigung.

Wenn die Stege bzw. Drähte punktweise mit der Innenseite des Außenbehälters verschweißt werden, also an voneinander beabstandeten Schweißpunkten, dann entstehen zwischen den Schweißpunkten Diffusions- bzw. Durchtrittsstrecken für Gas quer zur Längserstreckung der Stege. Über diese Querverbindungen können Gaseinschlüsse neben den Stegen in die von den Stegen gebildeten Evakuierungskanäle abgesaugt werden.

Alternativ könnten die Stege in ihrer Querrichtung auch gasdurchlässig sein, beispielsweise indem sie aus porösem Material gefertigt sind.

Die wärmestrahlungsreflektierende Folie kann aus jedem dafür geeigneten Material sein, z.B. einem beliebigen dünnen Metallblech, einer Aluminiumfolie usw. Bevorzugt ist die Folie ein mehrlagiger Metallfolienverbund mit einem Glasfasergewebe, -gelege oder -vlies zwischen den Metallfolienlagen. Beispielsweise kann die Metallfolie zusammen mit einem entsprechenden Gewebe, Gelege oder Vlies aufgerollt und dann auf den Innenbehälter geschoben werden.

Die Erfindung wird nachstehend anhand eines in den beigeschlossenen Zeichnungen dargestellten Ausführungsbeispiels näher erläutert. In den Zeichnungen zeigt:
Fig. 1 den Behälter der Erfindung in einem schematischen vereinfachten Längsschnitt;
Fig. 2 das Detail II von Fig. 1 vergrößert;
Fig. 3 einen Ausschnitt aus dem Detail II von Fig. 1 im Querschnitt;
Fig. 4 einen Teil des Außenbehälters, der Stegpaare und des Evakuierungsanschlusses des Behälters von Fig. 1 in einer Perspektivansicht; und
Fig. 5 eine alternative Variante des Details II von Fig. 1.

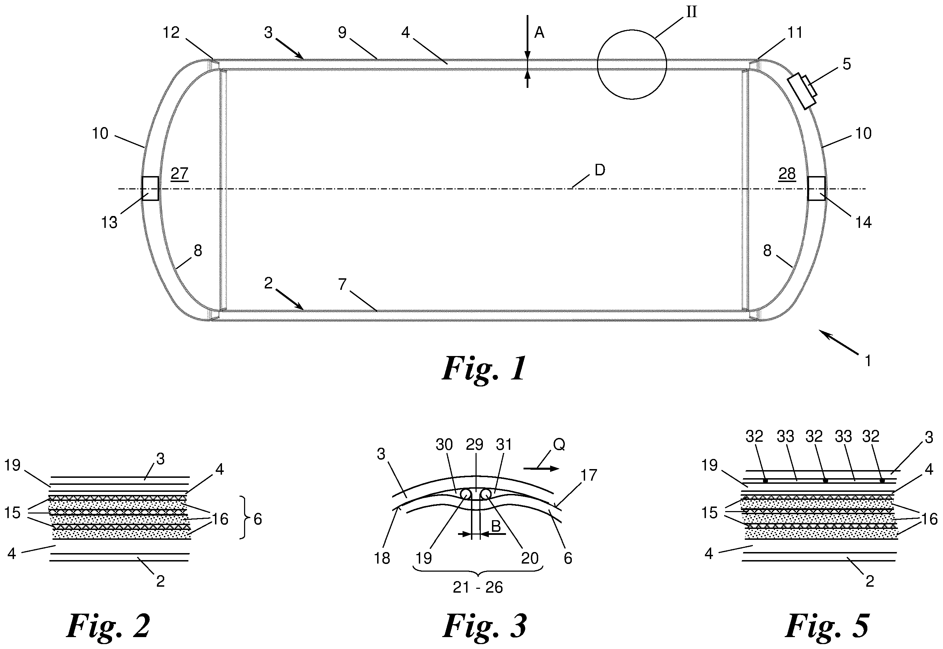

Fig. 1 zeigt einen Behälter 1 zur Aufnahme eines Kryofluids. Das Kryofluid kann beispielsweise Wasserstoff sein, der bei Temperaturen von bis zu -252 °C und darunter und einem Druck von bis zu 16 bar - oder mehr, je nach Behälterbauart - zumindest teilweise verflüssigt vorliegt, oder ein anderes, in Verbrennungskraftmaschinen oder Brennstoffzellen einsetzbares Kryofluid, z.B. verflüssigtes Erdgas (liquefied natural gas, LNG) mit einer Temperatur von bis zu -161 °C und darunter. Der Behälter 1 wird beispielsweise in der Art eines herkömmlichen Kraftstoffbehälters seitlich am Chassis bzw. Rahmen eines hier nicht dargestellten Nutzfahrzeugs, z.B. eines Lastkraftwagens (LKWs) oder Personenkraftwagens (PKWs), montiert.

Das Kryofluid kann aber auch ein Kältemittel sein, beispielsweise Flüssigstickstoff, mit dem das Kühlsystem von Kühllastern betrieben wird, z.B. von Lebensmitteltransportern. Demgemäß kann der Behälter 1 auch für die Speicherung solcher Kältemittel auf LKWs oder LKW-Anhängern verwendet werden.

Zur thermischen Isolierung des Kryofluids gegenüber der Außenumgebung ist der Behälter 1 doppelwandig aufgebaut, und zwar aus einem Innenbehälter 2 und einem diesen allseitig mit konstantem oder variierendem Abstand A umgebenden Außenbehälter 3. Der Zwischenraum 4 zwischen Innenbehälter 2 und Außenbehälter 3 wird über einen die Wandung des Außenbehälters 3 durchsetzenden Evakuierungsanschluss 5 evakuiert. In dem Zwischenraum 4 ist zusätzlich (zumindest) eine Folie 6 angeordnet, welche die vom Außenbehälter 3 auf den Innenbehälter 2 gerichtete Wärmestrahlung zurück zum Außenbehälter 3 reflektiert, um den Innenbehälter 2 kühl zu halten, wie später noch ausführlicher erörtert.

Da das Kryofluid im Innenbehälter 2 in der Regel unter Druck ist, ist (zumindest) der Innenbehälter 2 als Druckbehälter aus Metall oder einem druckfesten Materialverbund ausgeführt, beispielsweise aus Stahl, Aluminium oder einem Kompositmaterial. Der Außenbehälter 3 kann ebenfalls z.B. aus Metall gefertigt sein, aber auch aus Kunststoff, da er lediglich den Umgebungsdruck gegenüber dem Vakuum im Zwischenraum 4 widerstehen muss. Metalle, insbesonders Edelstähle, haben vakuumtechnisch günstige Eigenschaften.

Der Innenbehälter 2 hat einen allgemein-zylindrischen Mantel 7, der an seinen beiden Enden durch jeweils eine nach außen konvexe Kappe 8 abgeschlossen ist. Unter dem Begriff "allgemein-zylindrisch" wird ein Zylinder mit einer beliebigen Grund- bzw. Querschnittsfläche verstanden, sei sie kreisrund, oval, rechteckig, quadratisch oder quadratisch mit abgerundeten Ecken oder sonstwie geformt. Für höchste Druckfestigkeit haben der Mantel 7 und damit der Innenbehälter 2 einen kreisrunden Querschnitt.

Der Außenbehälter 3 ist überwiegend an die Außenform des Innenbehälters 2 - unter Einhaltung des Abstands A zur Errichtung des Zwischenraums 4 - angepasst. Der Außenbehälter 3 setzt sich insbesondere ebenso aus einem allgemein-zylindrischen Mantel 9 und zwei diesen endseitig verschließenden, nach innen konkaven Kappen 10 zusammen. Es versteht sich, dass der Abstand A auf allen Seiten des Innenbehälters 2 nicht überall gleich groß sein muss. Die Kappen 8, 10 werden z.B. mittels umlaufender Schweißnähte 11, 12 mit dem jeweiligen Mantel 7, 9 verschweißt.

Für die Kappen 8, 10 kann jede Art von im Druckkesselbau bekannten gewölbten Böden mit nach außen konvexer Wölbung verwendet werden, wie elliptische Böden, Klöpperböden, Korbbogenböden od.dgl. Für die Kappen 8, 10 können auch Diffuseurböden ("reverse-dished ends") verwendet werden, die einen zentral nach innen gewölbten Bereich haben, der von einem nach außen gewölbten Randbereich umgeben ist. Auch solche Diffuseurböden werden hier wegen ihrer zumindest randseitig konvexen Ausbildung unter dem Begriff "nach außen konvexe Kappe" subsumiert.

Zur Errichtung des allseitigen Abstands A ist der Innenbehälter 2 über Stützstrukturen 13, 14, die z.B. auf diametral gegenüberliegenden Seiten des Innenbehälters 2 angreifen, am Außenbehälter 3 abgestützt. Um thermische Längenänderungen des Innenbehälters 2 in Richtung der Diametrale D zwischen der ersten Stützstruktur 13 und der zweiten Stützstruktur 14 aufnehmen zu können, ist die zweite Stützstruktur 14 ein Loslager in Richtung der Diametrale D, d.h. gestattet Bewegungen der Kappe 8 in Richtung der Diametrale D, die erste Stützstruktur 13 hingegen ein Festlager. Optional könnte auch die erste Stützstruktur 13 ein derartiges Loslager sein.

Die Stützstrukturen 13, 14 sind in Fig. 1 nur schematisch dargestellt und können auf jede in der Technik bekannte Art ausgebildet sein.

Fig. 2 zeigt eine beispielhafte Ausführungsform der Folie 6 im Zwischenraum 4 zwischen Innenbehälter 2 und Außenbehälter 3, insbesondere zwischen dem Mantel 7 des Innenbehälters 2 und dem Mantel 9 des Außenbehälters 3. Die Folie 6 ist in dem gezeigten Beispiel ein mehrlagiger Metallfolienverbund aus drei Lagen 15 einer Metallfolie, zwischen bzw. neben denen sich drei Lagen 16 eines Glasfasergewebes, -geleges oder -vlieses befinden. Beispielsweise wird eine großformatige Metallfolie mit einem großformatigen Glasfasergewebe deckungsgleich übereinandergelegt und in mehreren Lagen aufgerollt, was eine rohrförmige Hülle ergibt, die auf den Innenbehälter 2 vor seiner Montage im Außenbehälter 3 aufgeschoben werden kann.

Wenn der Zwischenraum 4 über den Evakuierungsanschluss 5 evakuiert wird, um ein Vakuum im Zwischenraum 4 zu errichten, kann es passieren, dass sich die flexible Folie 6 mit ihrer Außenseite 17 an die Innenseite 18 des Außenbehälters 3 anlegt. Dabei können Gase in Gaseinschlüssen bzw. Gastaschen eingeschlossen werden, von wo sie mit der Zeit durch die Folie 6 aus- und in den Zwischenraum 4 eindiffundieren können und dann das Vakuum beeinträchtigen. Um dies zu verhindern, dienen die im Folgenden beschriebenen Maßnahmen.

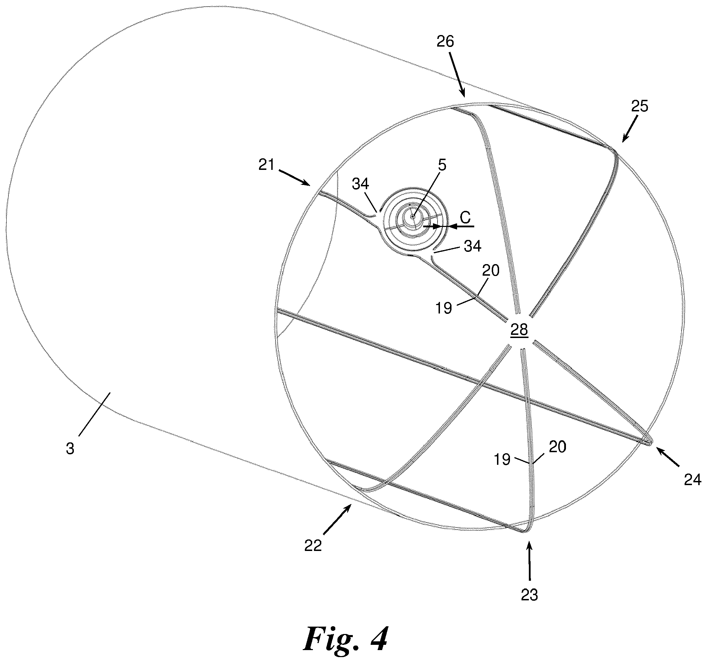

Zwischen der Innenseite 18 des Außenbehälters 3 und der Außenseite 17 der Folie 6 ist zumindest ein Steg 19 bzw. 20 angeordnet, der z.B. von einem dem Evakuierungsanschluss 5 entfernten Ort 27 des Behälters 1 ausgeht und zumindest bis in die Nähe des Evakuierungsanschlusses 5 verläuft. In dem in den Fig. 3 und 4 gezeigten Beispiel sind sechs Paare 21 - 26 von jeweils zwei Stegen 19, 20 über den Innenumfang des Außenbehälters 3 verteilt, die von dem Ort 27, dort voneinander beabstandet, ausgehen und bis zu einem dem Ort 27 gegenüberliegenden Ort 28 des Außenbehälters 3 verlaufen. Die Orte 27, 28 sind beispielsweise an den Stirnseiten des Behälters 1 angeordnet, d.h. einander diametral gegenüberliegend in der Diametrale D. Auch am Ort 28 sind die Stegpaare 21 - 26 voneinander beabstandet.

Die beiden Stege 19, 20 jedes Stegpaares 21 - 26 verlaufen etwa parallel zueinander unter einem gegenseitigen Abstand B, sodass sich zwischen den Stegen 19, 20 ein Evakuierungskanal 29 ausbildet. Aufgrund des gegenseitigen Abstandes B der Stegpaare 21 - 26 am Ort 27 bzw. 28 stehen dort die Evakuierungskanäle 29 aller Stegpaare 21 - 26 untereinander in Strömungsverbindung.

Die Stege 19, 20 eines der Stegpaare 21 - 26, hier des Stegpaares 21, passieren auf ihrem Weg vom Ort 27 zum Ort 28 den Evakuierungsanschluss 5 und laufen dabei vorübergehend auseinander, um zwischeneinander den Evakuierungsanschluss 5 mit einem Abstand C zu umgeben. Damit ist der Evakuierungskanal 29 des Stegpaares 21 in Strömungsverbindung mit dem Evakuierungsanschluss 5 und der Evakuierungsanschluss 5 über die Strömungsverbindungen an den Orten 27 und 28 auch mit den Evakuierungskanälen 29 aller anderen Stegpaare 22 - 26. Der Ort 28 könnte alternativ gleich direkt der Ort des Evakuierungsanschlusses 5 sein, d.h. alle Stegpaare 21 - 26 an ihrem dem entfernten Ort 27 gegenüberliegenden Ende rund um und in einem Abstand zum Evakuierungsanschluss 5 enden.

Allgemein gesprochen kann der Evakuierungsanschluss 5 über eine beliebige Anzahl von von ihm ausgehenden Stegen 19, 20 bzw. Stegpaaren 21 - 26 mit einem oder mehreren näherliegenden Orten 28 oder entfernten Orten 27 in Strömungsverbindung stehen.

Grundsätzlich können aber in jedem beliebigen Bereich zwischen der Innenseite 18 des Außenbehälters 3 und der Außenseite 17 der Folie 6 ein oder mehrere Stege 19 bzw. 20 angeordnet werden, insbesondere auch an Engstellen des Zwischenraum wie Sicken für die Schweißnähte 11, 12, die zu einem dort reduzierten Abstand A führen. Solche Engstellen können sich aber auch an den Stoßstellen oder Überlappungsstellen der Lagen 15, 16 einer mehrlagigen Folie 6 ergeben. Auch dort ist Anordnung eines oder mehrerer Stege 19, 20 sinnvoll, um das Evakuieren des Zwischenraums 4 ohne Gaseinschlüsse durch Engstellen zu bewerkstelligen.

Die Funktionsweise der einzelnen Stege 19, 20 bzw. Stegpaare 21 - 26 ist aus Fig. 3 ersichtlich. Jeder Steg 19, 20 beabstandet beim Evakuieren des Zwischenraums 4 die Folie 6 vom Außenbehälter 3, sodass sich zu beiden Seiten des Steges bzw. Stegpaares ein kleiner keilförmiger Evakuierungskanal 30, 31 zwischen der Außenseite 17 der Folie 6, der Innenseite 18 des Außenbehälters 3 und der Seitenwand des jeweiligen Stegs 19, 20 ergibt. Allfällig dort verbliebene Gaseinschlüsse zwischen Folie 6 und Außenbehälter 3 werden über diese Evakuierungskanäle 30, 31 abgesaugt. Zwischen den Stegen 19, 20 jedes Stegpaares 21, 26 ergeben sich die genannten Evakuierungskanäle 29, die eine Art von "Hauptschlagadern" für das Evakuieren des Zwischenraums 4 bilden.

Die Stege 19, 20 können aus jedem beliebigen vakuumtauglichen Material gefertigt sein, beispielsweise Kunststoff, Metall, Glasfasern usw. Im gezeigten Beispiel sind die Stege 19, 20 Drähte, die auf die Innenseite 18 des Außenbehälters 3 aufgeschweißt werden.

Insbesondere können die Stege bzw. Drähte 19, 20 auch nur punktweise aufgeschweißt werden, wie in Fig. 5 gezeigt. Zwischen den Schweißpunkten 32 ergeben sich dann Gasdurchströmungswege 33 in Querrichtung Q (Fig. 3) quer zur Längserstreckung der Stege 19, 20. Über diese Wege können allfällige Gaseinschlüsse in die Evakuierungskanäle 29 eindiffundieren und über diese abgepumpt werden. Die Gasteilchen können damit gleichsam "unterhalb" der Stege bzw. Drähte 19, 20 in Querrichtung Q "wandern".

Eine ähnliche Wirkung ist erzielbar, indem jeder Steg bzw. Draht 19, 20 in seinem jeweiligen Verlauf zumindest eine Unterbrechung 34 hat (Fig. 4), d.h. in Querrichtung Q vollständig durchbrochen ist. Die Gasteilchen können an der Unterbrechung 34 in Querrichtung Q von einer zur anderen Stegseite wandern. Eine solche Unterbrechung 34 ist kürzer, gleich lang oder geringfügig länger als die Stegbreite bzw. der Drahtdurchmesser und kann z.B. in regelmäßigen Abständen und/oder an Stellen angeordnet sein, wo Gaseinschlüsse aus konstruktiven Gründen besonders wahrscheinlich sind oder ein beschleunigter Gasdurchtritt gewünscht ist, beispielsweise im Bereich rund um den Evakuierungsanschluss 5 (Fig. 4), um das Evakuieren zu erleichtern.

Ferner kann eine Unterbrechung 34 an einer herstellungsbedingten Nahtstelle des Außenbehälters vorgesehen sein; z.B. könnte der jeweilige Steg oder Draht 19, 20 bis zum Rand der Sicke der Kappe 10 für die Schweißnaht 11 verlaufen, dort unterbrochen sein und nach seiner Unterbrechung 34 am Mantel 9 weiter verlaufen. Der jeweilige Steg oder Draht 19, 20 kann dadurch in separaten Abschnitten vor dem Zusammensetzen und Verschweißen von Mantel 9 und Kappe 10 zum Außenbehälter 3 mit ihrer jeweiligen Innenseite 18 verbunden werden.

Es versteht sich, dass der bzw. die Stege 19, 20 nicht nur mit der Innenseite 18 des Außenbehälters 3 verbunden sein können, sondern alternativ oder zusätzlich auch mit der Außenseite 17 der Folie 6. Auch können ein oder mehrere Stege 19, 20 mit der Innenseite 18, andere mit der Außenseite 17 verbunden sein.

Die Dicke der Stege 19, 20, im Falle von Drähten ihr Drahtdurchmesser, kann etwa ihrem gegenseitigen Abstand B entsprechen. Die Stege 19, 20 können auch einstückig aus der Folie 6 und/oder dem Außenbehälter 3 ausgeformt sein. Beispielsweise könnte die Wandung des Außenbehälters 3 durch Rillen oder Prägen nach innen zu den Stegen 19, 20 ausgeformt werden. In einer alternativen Ausführungsform könnten die Stege 19, 20 auch einfach zwischen Folie 6 und Außenbehälter 3 eingelegt werden. Mehrere solche eingelegten Stege 19, 20 können auch zu einer Art Gitter oder Netz verbunden sein, das zwischen Folie 6 und Außenbehälter 3 zwischengelegt wird.

Die Erfindung ist nicht auf die dargestellten Ausführungsformen beschränkt, sondern umfasst alle Varianten, Modifikationen und deren Kombinationen, die in den Rahmen der angeschlossenen Ansprüche fallen.

## Patentansprüche

1. Behälter zur Aufnahme eines Kryofluids, insbesondere kryogenen Wasserstoffs, mit einem Außenbehälter (3) und einem darin über eine Stützstruktur (13, 14) beabstandet angeordneten Innenbehälter (2), wobei der Zwischenraum (4) zwischen Außen-und Innenbehälter zwecks Wärmeisolierung über einen die Wandung des Außenbehälters (3) durchsetzenden Evakuierungsanschluss (5) evakuierbar ist, und wobei im Zwischenraum (4) zumindest eine wärmestrahlungsreflektierende Folie (6) liegt, **dadurch gekennzeichnet, dass** zwischen der Innenseite (18) des Außenbehälters (3) und der Außenseite (17) der Folie (6) zumindest ein Steg (19, 20) angeordnet ist.

2. Behälter nach Anspruch 1, **dadurch gekennzeichnet, dass** der zumindest eine Steg (19, 20) von einem dem Evakuierungsanschluss (5) entfernten Ort (27) des Behälters (1) ausgeht und zumindest bis in die Nähe des Evakuierungsanschlusses (5) verläuft.

3. Behälter nach Anspruch 2, **dadurch gekennzeichnet, dass** der zumindest eine Steg (19, 20) in seinem Verlauf zumindest eine Unterbrechung (34) hat.

4. Behälter nach Anspruch 2 oder 3, **dadurch gekennzeichnet, dass** zumindest ein Paar (21 - 26) von Stegen (19, 20) vorgesehen ist, die zwischeneinander einen Evakuierungskanal (29) bilden.

5. Behälter nach Anspruch 4, **dadurch gekennzeichnet, dass** die Stege (19, 20) des Stegpaares (21 - 26) etwa parallel zueinander verlaufen.

6. Behälter nach Anspruch 5, **dadurch gekennzeichnet, dass** der gegenseitige Abstand (B) der Stege (19, 20) eines Paares (21 - 26) etwa der Dicke eines Steges (19, 20) entspricht.

7. Behälter nach einem der Ansprüche 4 bis 6, **dadurch gekennzeichnet, dass** mehrere Stegpaare (21 - 26) über den Innenumfang des Außenbehälters (3) verteilt sind.

8. Behälter nach Anspruch 7, **dadurch gekennzeichnet, dass** die Evakuierungskanäle (29) aller Stegpaare (21 - 26) am genannten entfernten Ort (27) miteinander in Strömungsverbindung stehen, bevorzugt indem die Stegpaare (21 - 26) am genannten entfernten Ort (27) voneinander beabstandet sind.

9. Behälter nach Anspruch 7 oder 8, **dadurch gekennzeichnet, dass** die Stegpaare (21 - 26) vom genannten entfernten Ort (27) bis zum Evakuierungsanschluss (5) verlaufen und ihre Evakuierungskanäle (29) dort mit dem Evakuierungsanschluss (5) in Strömungsverbindung stehen, bevorzugt indem sie dort voneinander und von diesem beabstandet sind.

10. Behälter nach Anspruch 7 oder 8, **dadurch gekennzeichnet, dass** die Stege (19, 20) eines der Stegpaare (21) den Evakuierungsanschluss (5) passieren und dabei vorübergehend auseinanderlaufen, um zwischeneinander den Evakuierungsanschluss (5) mit Abstand (C) zu umlaufen.

11. Behälter nach Anspruch 10, **dadurch gekennzeichnet, dass** die Stegpaare (21 - 26) vom genannten entfernten Ort (27) bis zu einem diesem gegenüberliegenden Ort (28) des Behälters (1) verlaufen und dort miteinander in Strömungsverbindung stehen, bevorzugt indem sie am genannten gegenüberliegenden Ort (28) voneinander beabstandet sind.

12. Behälter nach einem der Ansprüche 1 bis 11, **dadurch gekennzeichnet, dass** mehrere Stege (19, 20) vorgesehen sind, die untereinander zu einem Gitter oder Netz verbunden und zwischen die Innenseite (18) des Außenbehälters (3) und die Außenseite (17) der Folie (6) eingelegt sind.

13. Behälter nach einem der Ansprüche 1 bis 11, **dadurch gekennzeichnet, dass** die Stege (19, 20) auf der Außenseite (17) der Folie (6) festgelegt sind.

14. Behälter nach einem der Ansprüche 1 bis 11, **dadurch gekennzeichnet, dass** die Stege (19, 20) mit der Innenseite (18) des Außenbehälters (3) verbunden sind, bevorzugt verschweißt oder einstückig damit ausgebildet.

15. Behälter nach einem der Ansprüche 1 bis 11, **dadurch gekennzeichnet, dass** die Stege (19, 20) mit der Innenseite (18) des Außenbehälters (3) an voneinander beabstandeten Schweißpunkten (32) verschweißt sind.

16. Behälter nach einem der Ansprüche 1 bis 15, **dadurch gekennzeichnet, dass** die Stege (19, 20) in Querrichtung (Q) gasdurchlässig sind.

17. Behälter nach einem der Ansprüche 1 bis 16, **dadurch gekennzeichnet, dass** die Stege (19, 20) durch Drähte gebildet sind.

18. Behälter nach einem der Ansprüche 1 bis 17, **dadurch gekennzeichnet, dass** die Folie (6) ein mehrlagiger Metallfolienverbund mit einem Glasfasergewebe, -gelege oder -vlies (16) zwischen den Metallfolienlagen (15) ist.
